# EUROPÄISCHE PATENTSCHRIFT

(11) **EP 3 023 916 B1**
(45) Veröffentlichungstag und Bekanntmachung des Hinweises auf die Patenterteilung: **30.12.2020**
(21) Anmeldenummer: 15194578.9
(22) Anmeldetag: 13.11.2015
(51) Int. Cl.: G06K 19/06, G06T 7/73, G06T 7/13, G06T 7/90, H04N 13/161

(54) **CODIEREN/DECODIEREN VON INFORMATIONEN AUS EINER GRAPHISCHEN INFORMATIONSEINHEIT**
ENCODING/DECODING OF INFORMATION FROM A GRAPHICAL INFORMATION UNIT
CODAGE/DECODAGE D'INFORMATIONS PROVENANT D'UNE UNITE D'INFORMATION GRAPHIQUE

(30) Priorität: 14.11.2014 DE 102014116692
(43) Veröffentlichungstag der Anmeldung: 25.05.2016
(73) Patentinhaber: Gesellschaft zur Förderung angewandter Informatik e.V., 12489 Berlin (DE); Ahrweiler, Michael, 10115 Berlin (DE)
(72) Erfinder: Ahrweiler, Michael, 10115 Berlin (DE); Herfert, Daniel, 12555 Berlin (DE)
(74) Vertreter: Gulde & Partner

(56) Entgegenhaltungen:
- DE-U1-202013 103 662
- US-A1- 2013 215 473
- US-A1- 2014 108 606

## Beschreibung

Die Erfindung betrifft ein Verfahren zum Codieren von Informationen aus einer graphischen Informationseinheit und ein Verfahren zum Decodieren von Informationen aus einer codierten graphischen Informationseinheit.

Angefangen in den Bereichen der Logistik, in vielen Dienstleistungsbereichen, im Handel, zur Identifizierung von Waren und Personen und in Produktionsbetrieben haben automatische Identifikationsverfahren (Auto-ID) mit Hilfe von Barcodetechnologien in den letzten Jahren eine große Bedeutung erlangt. Aufgabe und Ziel der Auto-ID ist die Bereitstellung von digitalen Informationen zu Personen, Tieren, Gütern und Waren.

Neben der automatischen Identifikation bietet besonders das sogenannte Mobile-Tagging einen großen Einsatzbereich für neue Barcodetechniken. Beim Mobile-Tagging werden drei unterschiedliche Bereiche unterschieden: Das Commercial Tagging wie zum Beispiel in der Werbung mit Zusatzinformationen auf Produkten, Direktdownloads, direkter Weiterleitung auf die Webseite eines Unternehmens. Das Public Tagging bietet eine Anreicherung bestehender öffentlicher Informationen wie zum Beispiel von Hinweisschildern, Wegbeschreibungen, Fahrplänen, Sehenswürdigkeiten oder ähnlichem. Schließlich das Private Tagging, hier liegt der Fokus auf der Übermittlung privater Informationen wie z.B. bei Visitenkarten, URL-Verlinkungen usw.

Durch die Entwicklung und Verbreitung von mobilen Endgeräten, Druckern, Kameras, Scannern und den damit verbundenen steigenden mobilen Möglichkeiten bei der Integration von Barcodes als digitales Informationsmedium in den Alltag war ein rasanter Wachstum der Anwendungsmöglichkeiten für Barcodes festzustellen. Besonders der QR (Quick Response)-Code wird mit wachsender Tendenz immer stärker zum Mobile-Tagging in den Alltag integriert. Die Gründe für die schnelle Verbreitung des QR-Codes liegen zu großen Teilen in seiner hohen Informationsdichte (bis zu 4296 Zeichen) bei einem geringen Platzbedarf und der verhältnismäßig hohen Lesesicherheit (Integration von Algorithmen zur Fehlerkorrektur- und Fehlerintegritätsprüfung) mit modernen Kameras. Ein weiterer wesentlicher Punkt für den hohen Bekanntheitsgrad des QR-Codes ist die kostenlose Bereitstellung bzw. Integration des QR-Codes in bestehende Barcode-Scanner-Software, die auf allen gängigen Smartphones und Tablets verwendet werden kann.

Die Entwicklung der gängigen und heutzutage auch in anderen Wirtschaftsbereichen eingesetzten Barcodes (eingeschlossen dem QR-Code) erfolgte unter der hauptsächlichen Berücksichtigung der Logistikbranche als Einsatzgebiet. Diese Fokussierung spiegelt sich vor allem im Design und in den Sicherheitsmechanismen wieder. Besonders für den Marketingbereich und die Anreicherung bestehender öffentlicher Informationen ist das ursprüngliche Schwarz-Weiße Matrixmuster aus graphischer und werbewirksamer Sicht nicht ausreichend.

Ein weiterer Kritikpunkt an den derzeit eingesetzten Barcodes ist die sehr geringe Individualisierbarkeit, so dass ein individuelles Corporate Design nicht umsetzbar ist. Aus diesem Grunde wurden graphische Erweiterungen z.B. am QR-Code (Customized QR-Code) vorgenommen, die mit Hilfe der hohen Datenredundanz des QR-Codes möglich waren. Trotz einer maximal möglichen Datenredundanz von 30% beim Customized QR-Code dominiert ein nicht an die zusätzliche visuelle Information angepasster und für den Menschen nicht interpretierbarer und vom restlichen graphischen Kontext losgelöster Code das Gesamtbild.

Ein weiterer großer Nachteil bei den meisten bestehenden Barcodelösungen (eingeschlossen dem QR-Code) liegt in der Umsetzung der Sicherheitsbedingungen. Für den Anwender existiert bei allen gängigen Mobile Tagging-Barcodelösungen, die durch ein Smartphones lesbar sind, kein Sicherheitskonzept, da vor dem Einlesen nicht erkennbar ist, was das Einscannen auslöst. Dieser Schwachpunkt wurde schon durch das Installieren von Schadsoftware auf dem Smartphone oder durch die Weiterleitung zu kostenpflichtigen Diensten ausgenutzt. Ein weiterer großer Schwachpunkt von vielen Barcodes ist die mögliche Verfälschung durch Dritte, die wiederum zu einer Schädigung des Anwenders führen (z.B. Austausch von Produktetiketten) kann.

US 8,144,922 B2 offenbart die Verwendung einer transparenten infrarotabsorbierenden Tinte für eine Codierung.

US 8,526,670 B2 offenbart das Überlagern eines Logos mit einem Raster aus Zellenpunkten mit einer Helligkeit, die höher als die Helligkeit des Logos ist.

EP 2 224 373 A2 offenbart, dass hellere Punkte einem Logo überlagert werden. Dabei ist im Wesentlichen vorgesehen, dass die Information mittels weißer Zellenpunkte dargestellt wird, die einem schwarzen Logo überlagert werden.

EP 2 731 057 A1 offenbart ein Verfahren zum Codieren von Information in ein Bild, wobei ein sichtbares Raster über das Bild gelegt wird und Information in dem Raster codiert wird. Die Codierung kann dabei über der Fläche oder neben der Fläche des Bildes angeordnet sein.

Der Erfindung liegt nun die Aufgabe zugrunde, die Codierung beziehungsweise Decodierung von Information zu verbessern.

Diese Aufgabe wird gelöst mit einem Verfahren zur Codierung gemäß Anspruch 1 beziehungsweise einem Verfahren zur Decodierung gemäß Anspruch 12.

Das erfindungsgemäße Verfahren zum Codieren von Informationen in eine graphische Informationseinheit umfasst die Schritte:
- Bestimmen einer Außenkontur der Informationseinheit; und
- Codieren von Information mittels eines mindestens zweidimensionalen Codes in mindestens einen Bereich ausschließlich innerhalb der Außenkontur, wobei die Codierung auf Bildpunkte der Informationseinheit angewendet wird, ein dreidimensionaler Farbcode verwendet wird, wobei ein Farbraum des Farbcodes zumindest ein Teil eines Farbraumes der Informationseinheit (1) ist.

Das erfindungsgemäße Verfahren hat den Vorteil, dass eine neuartige und intuitivere Interaktionsmöglichkeit zwischen analogen realen Informationen, wie zum Beispiel Logos und symbolhaften Darstellungen in Printmedien oder auf realen Schildern beziehungsweise Aufklebern im Alltag, und der digitalen Welt ermöglicht wird. Dies wird dadurch ermöglicht, dass der Code in die Information integriert wird beziehungsweise, dass der Code auf die Informationseinheit angewandt wird. Bislang waren die ursprüngliche Bildinformation und der Code immer separiert. Der Code wird nur innerhalb der Fläche der Informationseinheit angewandt, es werden also einzelne Pixel, Bildpunkte oder Unterelemente der Informationseinheit verändert oder codiert. Durch die Beschränkung der Code-Anwendung auf die Informationseinheit bleibt das Erscheinungsbild der Informationseinheit weitgehend erhalten.

Eine graphische Informationseinheit umfasst hier zunächst jede graphische Darstellung. Dies kann einzelne oder verbundene Symbole wie Buchstaben und Zahlen, Logos und/oder Bilder umfassen. Die Außenkontur entspricht einer Begrenzung oder Abgrenzung der Informationseinheit von einem Hintergrund. Der zweidimensionale Code hat zwei Koordinaten zum Beispiel x und y, wobei das Koordinatensystem von der Fläche, auf der die Informationseinheit angeordnet ist, und/oder von der Informationseinheit selbst definiert oder vorgegeben sein kann. Diese 2D-Codierung kann als ein Schwarz-Weiß Code umgesetzt sein.

Der Code beziehungsweise die codierte Informationseinheit kann an physischen Orten und Objekten angebracht und digital verteilt werden und gewährleistet einen inhaltlichen Bezug in visueller Form der zu codierenden Information. Im Unterschied zu den derzeit in der Praxis eingesetzten Barcodeformen, wie zum Beispiel dem QR-Code, ist der darzustellende Inhalt direkt für den Menschen und für ein Erfassungsgerät wie einen Scanner interpretierbar. Die codierte Information weist ein deutlich realitätsnäheres Erscheinungsbild auf. Diese designtechnischen Maßnahmen sind besonders im Hinblick auf die Mensch-Rechner-Interaktion von besonderer Bedeutung, da durch eine realitätsnahe Darstellung von digitalen Inhalten ein besseres Verständnis für den digitalen Inhalt des Barcodes entsteht und die alltägliche Benutzung intuitiver erscheint. Zusätzlich wird durch diese Maßnahmen das Vertrauen des Anwenders beim Einscannen der codierten Informationseinheit vergrößert. Im Bereich der Logistik würde ein weiterer Vorteil durch die Vereinigung des Produktbildes mit der dazugehörigen Codeinformation entstehen, da hierdurch eine geringere Fehlerquote bei der Zuordnung vom Code zum passenden Produkt bei der Anlieferung von neuen Waren entstehen würde.

Ein dreidimensionaler Farbcode wird verwendet, wobei ein Farbraum des Farbcodes zumindest ein Teil eines Farbraumes der Informationseinheit ist. Unter realitätsnah wird in diesem Falle auch die Anpassung der zu verwendenden Farben an die zu codierende Informationseinheit verstanden, so dass die Codierung des Codes mit einer variablen Anzahl von Farbtönen durchführbar ist. Durch die Anpassung an den Farbraum der Informationseinheit bleiben neben der Form auch die farbliche Gestaltung der Informationseinheit und damit ihr Wiedererkennungswert weitgehend erhalten.

Ein Teilfarbraum des Farbraums des Farbcodes kann für eine zusammenhängende Gruppe von Elementen des adaptiven Rasters lokal festgelegt werden, abhängig von einer dieser Gruppe von Rasterelementen zugeordneten so genannten Gruppenfarbe. Diese Gruppenfarbe wird dazu für denjenigen Bereich der Informationseinheit lokal und separat bestimmt, in welchem die Gruppe der Elemente des adaptiven Rasters angeordnet ist. Im einfachsten Fall, dass dieser Bereich der Informationseinheit einfarbig ist, entspricht die Gruppenfarbe der Farbe des Bereichs. Falls der Bereich einen Farbverlauf aufweist oder allgemein mehrfarbig ist, so kann die Gruppenfarbe als Mittelwert oder Modalwert der in dem Bereich vorliegenden Farbwerte bestimmt werden. Eine zusammenhängende Gruppe von Elementen des adaptiven Rasters wird dabei insbesondere durch in benachbarten Zeilen und/oder Spalten des Rasters angeordnete Elemente gebildet, beispielsweise durch Elemente des Rasters, welche eine n*m-Teilmatrix des Rasters bilden, wobei n und m ganze Zahlen darstellen. Ein derart bestimmter Teilfarbraum für eine zusammenhängende Gruppe von Elementen ist dabei grundsätzlich unabhängig von einem Teilfarbraum, der für eine weitere Gruppe von Elementen des Rasters bestimmt wird, die in einem anderen Bereich der Informationseinheit angeordnet sind. Auf diese Weise wird der gesamte Farbraum der Codierung durch die einzelnen lokal berechneten Teilfarbräume erst gebildet.

Jede der Farben eines solchen Teilfarbraums kann sich dabei von der entsprechenden Gruppenfarbe - und jeder anderen Farbe des Teilfarbraums - nur bezüglich zumindest eines vorgegebenen Farbparameters (wie z.B. Helligkeit, Sättigung, Farbton) unterscheiden. Bevorzugt wird eine Unterscheidung gemäß der Helligkeit. Die Farben des Teilfarbraums sind somit alle hinreichend ähnlich oder passend zu der Gruppenfarbe, welche wiederum die Farbe des zugrundeliegenden Bereichs der Informationseinheit repräsentiert. Auf diese Weise wird eine Codierung der Informationseinheit möglich, die den optischen Eindruck der Informationseinheit nur sehr geringfügig stört. Gemäß einer ersten Variante können alle Farben des Teilfarbraums dabei "in einer Richtung" entlang des Farbparameters von der Gruppenfarbe abweichen, beispielsweise alle Farben des Teilfarbraums können heller sein als die Gruppenfarbe. Dies erleichtert das Decodieren. Alternativ können die Farben der Teilfarbraums in "verschiedenen Richtungen" entlang des Farbparameters von der Gruppenfarbe abweichen, beispielsweise heller oder dunkler sein als die Gruppenfarbe. Auf diese Weise wird eine optisch noch weniger auffällige Codierung erhalten.

Dadurch, dass die Teilfarbräume lokal bestimmt werden, lediglich mit Bezug auf eine zusammenhängende Gruppe von Elementen des Rasters, müssen in einem entsprechenden Decodierschritt, beim Decodieren der Information, welche durch die Rasterelemente der Gruppe codiert wird, auch lediglich die Farben des der Gruppe zugeordneten Teilfarbraums beachtet werden. Dies vereinfacht die Decodierung im Vergleich zu einem Codierverfahren, welches einen globalen Farbraum für die Codierung verwendet. Auf der anderen Seite kann der gesamte Farbraum der Codierung, welcher als Vereinigung der beschriebenen Teilfarbräume verstanden werden kann, so groß sein, so dass die Codierung farblich in optimaler Weise an die graphische Informationseinheit angepasst werden kann.

Um die Decodierung im Zusammenhang mit einem in der vorstehend beschriebenen Weise gebildeten Farbcode zu vereinfachen, kann ein vorgegebenes Element der Gruppe von Elementen des adaptiven Rasters mit derjenigen Farbe des Teilfarbraums gefärbt werden, die sich im Vergleich zu den anderen Farben des Teilfarbraums von der Gruppenfarbe bezüglich des vorgegebenen Farbparameters am deutlichsten unterscheidet, beispielsweise als hellste Farbe des Teilfarbraums. Diese Farbe bildet dann eine erste Referenzfarbe. In dem Fall, dass z.B. die Gruppenfarbe auch im Schritt des Decodierens noch eindeutig erkennbar ist, da der entsprechende Bereich der Informationseinheit z.B. einfarbig ist, kann die Gruppenfarbe als zweite Referenzfarbe dienen. Die von der ersten Referenzfarbe verschiedenen Farben des Teilfarbraums sind dann mit Bezug auf den Farbparameter "zwischen" der ersten Referenzfarbe und der zweiten Referenzfarbe angeordnet. Alternativ können als erste und zweite Referenzfarbe die beiden Farben des Teilfarbraums ausgewählt werden, die sich bezüglich des vorgegebenen Farbparameters am deutlichsten voneinander, aber auch von der Gruppenfarbe, unterscheiden. Beispielsweise können dies die hellste und die dunkelste Farbe des Teilfarbraums sein, z.B. in dem Fall, dass die Gruppenfarbe bezüglich der Helligkeit zwischen diesen beiden Farben angeordnet ist. Ein erstes vorgegebenes Element der Gruppe von Elementen des adaptiven Rasters kann dann mit der ersten Referenzfarbe gefärbt werden und ein zweites vorgegebenes Element der Gruppe von Elementen des adaptiven Rasters kann mit der zweiten Referenzfarbe gefärbt werden. Im Schritt des Decodierens können dann erst jeweils die beiden Referenzfarben ausgelesen werden und auf deren Basis, in Kenntnis einer vorgegebenen Anzahl der Farben des Teilfarbraums, die restlichen Farben des Teilfarbraums bestimmt werden. Mit anderen Worten besitzt gemäß dieser Ausführungsform jede der zusammenhängenden Gruppen von Rasterelementen ihre lokale Farbtabelle. Grundsätzlich können als Referenzfarben des Teilfarbraums beliebige zwei Farben des Teilfarbraums verwendet werden, d.h. es müssen nicht notwendigerweise die bezüglich des Farbparameters verschiedensten Farben als Referenzfarben dienen. Gemäß einer solchen Variante muss dann beim Decodieren zusätzlich zu der Anzahl der Farben des Teilfarbraums vorgegeben werden, z.B. in einer Headerinformation, wie in dem Teilfarbraum die restlichen Farben des Teilfarbraums bezüglich des Farbparameters relativ zu den Referenzfarben angeordnet sind.

Die Codierung kann mindestens zwei Markierungen für eine Lageerkennung der Informationseinheit aufweisen. Markierungen zur Lageerkennung können zum einen dazu dienen, beim Decodieren eindeutig die Lager der codierten Informationseinheit relativ zu einem Erfassungsgerät anzuzeigen. Alternativ oder zusätzlich können Markierungen zur Lageerkennung dazu dienen, Grenzen eines zur Informationscodierung verwendeten Anteils eines Rasters anzugeben. Vorzugsweise werden für diese beiden Zwecke (Erkennung der relativen Lage zum Erfassungsgerät, Erkennung der Grenzen) jeweils separate, voneinander unterscheidbare Markierungen zur Lageerkennung verwendet. Die Möglichkeit zur Lageerkennung erhöht die Schnelligkeit bei der Erfassung des Codes, da mit den mindestens zwei Markierungen ein Erkennungsraster oder-muster direkt über ein Codierungsraster gelegt werden kann. Insbesondere für eine Offline-Decodierung, das heißt ohne einen zentralen Server, ist die Lageerkennung wichtig.

Als Markierungen zur Lageerkennung können optisch auffällige und automatisch, per Bilderkennung, einfach zu identifizierende Markierungen verwendet werden, wie sie beispielsweise aus dem QR-Code bekannt sind.

Alternativ können z.B. in dem Fall, dass, wie vorstehend im Detail beschrieben, ein dreidimensionaler Farbcode verwendet wird und für die Codierung ein adaptives Raster verwendet wird, Markierungen für die Lageerkennung - allein oder unter anderem - durch geeignete Färbung zumindest eines Elements des adaptiven Rasters mit zumindest einer spezifischen Markierungsfarbe ausgebildet werden. Die Markierungsfarbe oder die Markierungsfarben, welche ein Rasterelement oder mehrere Rasterelemente als Lagemarkierung oder Teil einer Lagemarkierung kennzeichnen, überschreiten dabei jeweils eine vorgegebene Farbdifferenz zu einer Farbe eines Bereichs der Informationseinheit nicht, in dem das zumindest eine Element angeordnet ist. Ein Rasterelement wird dabei jeweils mit einer der Markierungsfarbe gefärbt. In dem Fall, dass mehrere Rasterelemente zum Bilden einer Lagemarkierung mit einer der Markierungsfarben gefärbt werden, so kann dazu eine oder mehrere Markierungsfarben verwendet werden, aber stets lediglich eine der Markierungsfarben für eines der Rasterelemente. Auf diese Weise bleibt die Markierung, im Vergleich zu herkömmlich bekannten Lagemarkierungen, optisch unauffälliger.

Eine Markierung zur Lageerkennung, welche durch Färben einer Mehrzahl von Elementen des adaptiven Rasters mit einer oder mehreren der Markierungsfarben ausgebildet wird, kann zusätzlich dadurch kenntlich gemacht werden, dass die Elemente der Mehrzahl der Elemente bezüglich des adaptiven Rasters eine vorgegebene Lagebeziehung zueinander aufweisen. Mit anderen Worten spielen hier Farbinformation und relative Lageinformation zusammen, um eine Markierung zur Lageerkennung zu bilden.

Die Codierung kann einen Header mit Angaben zu der Codierung aufweisen. In diesem Header können Angaben enthalten sein, welche eine Decodierung unter Umständen erst möglich machen beziehungsweise vereinfachen. Der Header kann Angaben wie zum Beispiel eine Angabe einer Decodierungsbibliothek (Version), eine Farbcodierungstabelle, Angaben zu Redundanz, dem zu verwendenden Zeichensatz und Verschlüsselungsinformationen enthalten.

Die zu codierende Information kann vor der Codierung verschlüsselt werden. Diese Integration eines Sicherheitsmechanismus erhöht die Sicherheit durch Schutz der codierten Informationseinheit vor Manipulationen durch Dritte und durch Schutz des Anwenders vor dem Herunterladen von Schadsoftware oder dem Weiterleiten an kostenpflichtige Dienste ohne Einwilligung.

Für die Codierung kann ein adaptives Raster verwendet werden, das an die Außenkontur und/oder den Farbraum der Informationseinheit angepasst wird. Das dynamische oder adaptive Raster erlaubt eine optimale Anpassung des Rasters und damit der Codierung an die Informationseinheit, so dass die Informationseinheit nur gering verändert wird, so dass einem menschlichen Betrachter der Gesamteindruck erhalten bleibt, einer maschinellen Erfassungseinheit der Code aber zugänglich ist. Vorteilig ist, wenn der menschliche Betrachter die Codierung erkennt, so dass er zum Beispiel sein Smartphone auf die codierte Informationseinheit richten kann, um die codierte Information zu erlangen.

Das erfindungsgemäße Verfahren zum Decodieren von Informationen aus einer codierten graphischen Informationseinheit umfasst die Schritte:
- Erfassen einer mit einem Verfahren nach mindestens einem der Ansprüche 1 bis 11 codierten Informationseinheit; und
- Decodieren der Information aus der codierten Informationseinheit.

Das Erfassen umfasst zum Beispiel ein Aufnehmen und/oder Scannen mit einer Erfassungseinheit wie beispielsweise einem Smartphone, Tablet oder einer dedizierten Scannereinheit, wie sie beispielsweise im Logistikbereich verwendet wird. Das Decodieren kann mit der Erfassungseinheit und/oder einer damit verbundenen Rechnereinheit wie zum Beispiel einem Server erfolgen. Bei einem Smartphone kann dies vorzugsweise durch eine Anwendung oder App geschehen.

Ein Erfassungsgerät kann die Information an eine Datenbank übertragen und eine der Information zugeordnete weitere Information von der Datenbank erhalten. Diese sogenannte Online-Decodierung arbeitet üblicherweise mit einem codierten Link, der auf einen Eintrag in der Datenbank verweist. Dazu ist der Scanner mit der Datenbank verbunden.

Ein Erfassungsgerät kann die Information verarbeiten. Bei dieser Offline-Decodierung ist die gesamte Information in der codierten Informationseinheit enthalten, so dass keine Online-Funktionalität im Erfassungsgerät vorhanden sein muss.

Bei der Decodierung kann mindestens einer der folgenden Schritte ausgeführt werden:
- Anpassen und/oder Anwenden eines Rasters auf die erfasste, codierte Informationseinheit;
- Erkennen einer Orientierung der erfassten, codierten Informationseinheit anhand mindestens zwei Markierungen;
- Erfassen eines Headers;
- Decodieren der Information basierend auf Angaben des Headers;
- Durchführen einer Fehlerkorrektur;
- Entschlüsseln der Information;
- Anzeigen der Information.

Diese Schritte oder einzelne dieser Schritte können bei der Decodierung ausgeführt werden. Die obige Reihenfolge ist dabei nicht verpflichtend, die Schritte können auch in einer anderen Reihenfolge oder teilweise parallel ausgeführt werden.

Ein erfindungsgemäßes Computerprogrammprodukt umfasst Programmteile, welche, wenn in einem Computer geladen, zur Durchführung eines Verfahrens wie zuvor beschrieben ausgelegt sind. Es gelten die gleichen Vorteile und Modifikationen wie zuvor beschrieben.

Die Erfindung wird nachfolgend in Ausführungsbeispielen anhand der zugehörigen Zeichnungen erläutert. Es zeigen:
- Figur 1: eine schematische Darstellung einer Informationseinheit und einer codierten Informationseinheit;
- Figur 2: eine schematische Darstellung der Codierung einer Informationseinheit;
- Figur 3: eine schematische Darstellung der Decodierung einer codierten Informationseinheit,
- Figuren 4 bis 9: schematisch spezifische Schritte eines Verfahrens zum Codieren von Informationen in eine graphische Informationseinheit gemäß einer ersten bevorzugten Ausführungsform;
- Figur 10: eine entsprechend codierte Informationseinheit; und
- Figur 11: eine Variante der Informationseinheit aus Figur 10.

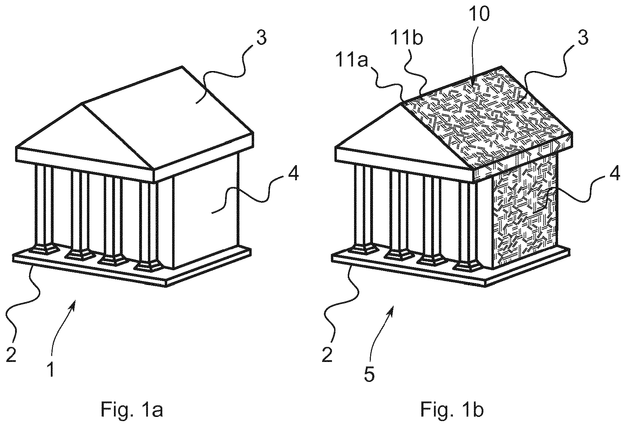

In Figur 1a ist eine Informationseinheit 1 dargestellt. Die Informationseinheit 1 besteht hier aus einem Logo oder einer bildlichen Darstellung. Generell kann eine Informationseinheit alle graphischen Darstellungen oder zweidimensionale Abbildungen umfassen. Die beiden Dimensionen sind die beiden Dimensionen der Oberfläche, auf welcher die Informationseinheit abgebildet ist. Die Oberfläche kann plan sein, wie zum Beispiel ein Blatt Papier oder ein Plakat. Andererseits kann die Oberfläche gekrümmt sein, wie zum Beispiel bei einem Werbeträger. Die beiden Koordinaten oder Dimensionen können als x- und γ-Richtung bezeichnet werden.

Die Informationseinheit kann auch aus einem oder mehreren Symbolen wie zum Beispiel Buchstaben oder Zahlen bestehen oder einer Kombination von einem oder mehreren Symbolen mit einer oder mehreren bildlichen Darstellungen.

Die Informationseinheit 1 ist von einer Außenkontur 2 begrenzt. Das heißt die Außenkontur 2 ist die Grenze oder Grenzlinie zwischen der Informationseinheit 1 und einem Hintergrund. Der Hintergrund kann dabei auf der gleichen Oberfläche liegen oder auf einer weiteren Fläche oder Oberfläche angeordnet sein.

Die Außenkontur 2 umschließt einen Innenraum 3, also einen Bereich ausschließlich innerhalb der Außenkontur 2. Der Innenraum 3 kann mehrere Bereich oder Abschnitte umfassen, von denen ein Bereich 4 beispielhaft dargestellt ist. Die Bereiche können beispielsweise durch unterschiedliche Farben oder Farbräume definiert sein. Andererseits können die Bereiche durch unterschiedliche Inhalte definiert sein, wie zum Beispiel ein Symbol und eine bildliche Darstellung. In dem dargestellten Beispiel eines Hauses ist zum Beispiel die rechte Seitenwand der Bereich 4. Die Seitenwand kann eine andere Farbe als das Dach und der Sockel des Hauses aufweisen. Auch die Säulen an der Vorderseite des Hauses können als Bereich angesehen werden, wobei die dreidimensionale Wirkung der Säulen durch unterschiedliche Weiß- beziehungsweise Grautöne hervorgerufen wird.

Die Informationseinheit 1 kann zum Beispiel ein Logo für ein Unternehmen, eine Institution, eine Dienstleistung oder ein Produkt sein. Sie kann auch ein Hinweis auf eine Information oder Anwendung sein. Die Informationseinheit transportiert üblicherweise einen Inhalt, mit dem der Betrachter der Informationseinheit 1 etwas verbindet oder erwartet. Im klassischen Sinne dient ein derartiges Logo zur gedanklichen Verknüpfung mit einem Unternehmen und/oder seinem Produkt.

Neben den Funktionen des Marketings und der Informationsvermittlung beispielsweise im öffentlichen Raum werden derartige Informationseinheiten auch im Bereich der Logistik verwendet, um Güter, Verpackungen und/oder Transportbehälter zu kennzeichnen und eine schnelle und sichere Zuordnung beziehungsweise Information zu erlauben.

Um derartige Informationseinheiten 1 weiter auszugestalten, das heißt mit erweiterter Funktionalität oder erhöhter Informationsdichte zu versehen, wird eine Codierung der Original-Informationseinheit 1 aus Figur 1a in eine codierte Informationseinheit 5 gemäß Figur 1b vorgeschlagen.

Dabei werden Information oder Nutzdaten integriert, indem ein mindestens zweidimensionaler Code innerhalb der Außenkontur 2 auf Bildpunkte der Informationseinheit 1 angewendet wird. Die Außenkontur 2 und damit die äußere Form bleiben somit erhalten. Die Codierung kann auch auf die Außenkontur 2 angewendet werden. Bei der Codierung wird das äußere Erscheinungsbild der originalen Informationseinheit 1 berücksichtigt. Dies geschieht über die beibehaltene Außenkontur 2. Die Außenkontur 2 ist vorzugsweise identisch bei der originalen Informationseinheit 1 und bei der codierten Informationseinheit 5. Zum anderen können Farbwerte oder Graustufen der Informationseinheit bei der Codierung berücksichtigt werden, so dass der Gesamteindruck der ursprünglichen Informationseinheit auch nach der Codierung erhalten bleibt.

In Figur 1b sind beispielhaft die beiden Flächen 3 und 4 codiert. Es ist möglich, alle, einen oder wie dargestellt mehrere Teilbereiche oder Teile der Informationseinheit zu codieren. Der Code 10 besteht aus einzelnen Bildpunkten 11, von denen zwei Bildpunkte 11a und 11b beispielhaft bezeichnet sind. Um die Bildpunkte 11 in der Darstellung von Figur 1b besser darzustellen, ist jedem Bildpunkt 11 ein Muster zugewiesen. Jedes Muster beziehungsweise jeder Übergang zwischen zwei vorzugsweise benachbarten Mustern kann für ein Bit bei einer schwarz-weißen Codierung oder für einen Wert von einem oder mehreren Bit bei einer farbigen Codierung stehen.

Aus Gründen der Darstellbarkeit in der schwarzweißen Darstellung der Figur sind die Bildpunkte 11 als jeweils ein Muster dargestellt. Diese Darstellung ist vorzugsweise ein Platzhalter für eine in der Figur nicht darstellbare Grauwert- oder Farbwertskalierung, welche an die Originaldarstellung beziehungsweise Originalfarbe oder -färben der originalen Informationseinheit 1 aus Figur 1a angepasst ist.

Durch diese auf die Informationseinheit abgestimmte Codierung bleibt für den menschlichen Betrachter der Gesamteindruck beziehungsweise der ästhetische Eindruck auch nach der Codierung vollständig oder zumindest nahezu vollständig erhalten. Darüber hinaus enthält die Informationseinheit aber zusätzlich die codierte Funktion. Die Informationseinheit hat also nunmehr die Doppelfunktion des Transports der ursprünglichen Information sowie der zusätzlich codierten Information. Die codierte Information beziehungsweise das Vorhandensein einer codierten Information oder anders ausgedrückt die Anwendung eines Codes auf die Informationseinheit kann für den menschlichen Betrachter sichtbar sein, so dass er einen Hinweis auf die zusätzliche, codierte Information erhält.

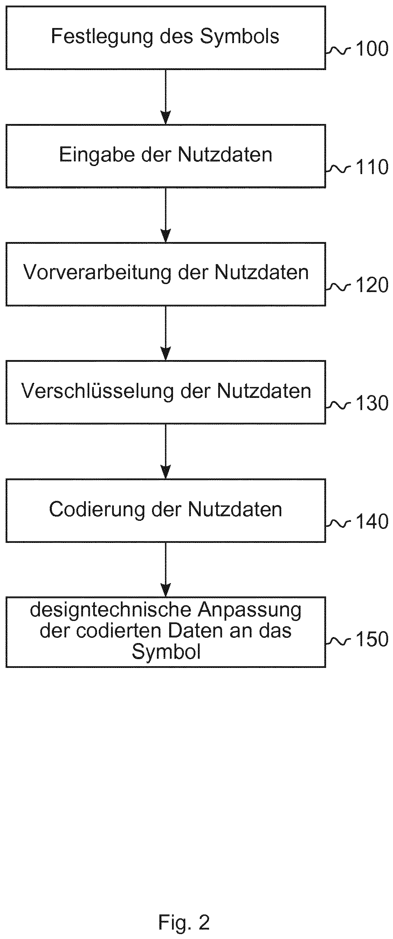

Anhand von Figur 2 wird nun der Vorgang der Codierung näher beschrieben.

In einem ersten Schritt oder Block 100 wird die Informationseinheit bestimmt oder festgelegt. Dies umfasst als erstes die Auswahl zum Beispiel mindestens eines Symbols und/oder mindestens einer Bildeinheit. Als nächstes wird die Außenkontur 2 der Informationseinheit bestimmt. Dies kann durch manuelle und/oder automatisierte Techniken wie zum Beispiel Freistellen oder Freischneiden realisiert werden.

In einem weiteren Schritt 110 werden die zu codierenden Informationen oder Nutzdaten eingegeben. Die Information kann zum Beispiel einen Text umfassen, der auf einem Computer bereits vorliegt oder erstellt wird. Der Text kann Zahlen und/oder Buchstaben enthalten und beispielsweise Information zu der Informationseinheit oder zu mit dieser verbundenen Unternehmen oder ähnlichem liefern. Die Information kann auch ein Programmcode oder eine Anweisung an ein Programm enthalten oder sein. Dies kann zum Beispiel ein Link für eine Internetadresse oder einen Datenbankeintrag umfassen oder sein.

In einem Schritt 120 werden die Nutzdaten oder die Information vorverarbeitet. Die Vorverarbeitung kann zum Beispiel eine Komprimierung der Information und/oder eine Auswahl des Codes umfassen. Zur Verbesserung der zu codierenden Informationsdichte kann dabei die zu codierende Information in einem Vorverarbeitungsschritt in Codeworte umgeschlüsselt oder komprimiert werden. Hierfür können entsprechende bereits existierende Komprimierungsverfahren verwendet und gegebenenfalls angepasst werden. Es kommen vor allem Verfahren aus dem Bereich der verlustfreien Textkomprimierung in Betracht, wie zum Beispiel der LZW-Algorithmus, die Huffman-Codierung oder die arithmetische Codierung.

In einem nächsten Schritt 130 wird die in die Informationseinheit 1 zu codierende Information verschlüsselt.

Durch die immer größer werdende Verbreitung von mobilen internetfähigen Geräten im privaten und gewerblichen Sektor steigt dementsprechend auch die Anzahl der kriminellen Angriffe auf die Besitzer dieser Geräte. Die sogenannten mobilen Gefahren können unter anderem das Ausspionieren von Informationen, ein Informationsverlust, ein Identitätsdiebstahl und/oder das Installieren von Schadsoftware sein. Besonders im Bereich des Mobile Taggings sind diese Sicherheitslücken für den Anwender ein oft angeführter Negativpunkt bei bestehenden Barcodelösungen wie zum Beispiel dem QR-Code, da vor dem Einscannen des Barcodes keine Vorabinformationen für den Anwender ersichtlich sind und bei den gängigen Barcodescannern keine Überprüfung bezüglich der decodierten Information stattfindet.

Da die Codierungsvorschriften aller derzeit bekannten Barcodelösungen offen zur Implementierung vorliegen, ist eine Manipulation der codierten Information durch den Austausch des Barcodes durch Dritte möglich. Zur Vermeidung dieser Sicherheitslücken werden Verwendungen von entsprechenden Sicherheitsmechanismen stattfinden.

Die Codierung kann mit zwei unterschiedlichen Ansätzen umgesetzt werden, so dass die Codierung beziehungsweise der Code variabel an unterschiedlichste Einsatzgebiete anpassbar ist. Zum einen kann eine Codierung der gesamten Information direkt im Barcode erfolgen und zum anderen können eine Speicherung der gesamten Information innerhalb einer Datenbank und eine ausschließliche Codierung der Datenbankreferenz direkt in der Informationseinheit vorgesehen sein.

Dieser erste Ansatz der Codierung der gesamten Information direkt im Code ist besonders im Bereich des Mobile Tagging anzutreffen, indem unter anderem URL' s oder Kontaktinformationen direkt im Barcode codiert werden. Da die gesamte Information direkt im Barcode codiert wird, ist mit diesem Ansatz eine deutlich geringere Informationsdichte im Vergleich zum Einsatz mit einer Datenbank zu erreichen. Nach dem Drucken des Codes können keine nachträglichen Änderungen hinsichtlich der gespeicherten Informationen durchgeführt werden. Dann ist eine nachträgliche oder dynamische Veränderung der zu codierenden Informationen zum Beispiel bei Tippfehlern oder nicht mehr existierenden URL-Adressen erforderlich.

Dieser zweite Ansatz der Speicherung der gesamten Information innerhalb einer Datenbank und der Codierung der Datenbankreferenz wird in den meisten Fällen innerhalb der Logistikbranche und in vielen Anwendungen von Auto-ID Systemen ausgewählt. Zur Erkennung und Kennzeichnung unter anderem Zählung der Produkte wird eine Datenbank benötigt. Der Code dient in diesen Fällen nur zur Identifikation des Produktes und die dazugehörigen Informationen sind in einer Datenbank gespeichert.

Um eine Übertragung der Daten der Decodierung zum Beispiel bei einer Decodierung auf dem Smartphone zur jeweiligen Software zur Verwaltung der Datenbankeinträge zu ermöglichen, umfasst die Smartphone-Applikation eine Kommunikationsmöglichkeit wie zum Beispiel eine TCP/IP Funktionalität. Weiterhin besteht eine Serverkomponente, die die decodierten Daten auf dem Server empfängt und eine Schnittstelle zum Datenaustausch zur eingesetzten Software zur Verwaltung der Datenbankeinträge aufweist. Somit findet die Decodierung der Datenbankreferenz auf dem Client wie zum Beispiel einem Smartphone statt. Dann werden die Daten an einen zentralen Server geschickt, der dementsprechend die dazu passenden Informationen aus der Datenbank dem Client zur Anzeige oder weiteren Verarbeitung zurückgibt. Die Umsetzung dieser Infrastruktur kann dabei die identische Decodierungsfunktionalität wie im ersten Ansatz nutzen und kann daher gewissermaßen als eine Erweiterung des ersten Ansatzes um eine TCP/IP Übertragungskomponente gesehen werden.

Zum Schutz vor Manipulationen durch Dritte können bereits bestehende Verschlüsselungsverfahren oder digitale Signaturverfahren innerhalb des Codierungs- bzw. Decodierungsprozesses und/oder eines Prüfziffernberechnungsverfahren eingesetzt werden. Dadurch wird eine Manipulation des vorgeschlagenen Codes verhindert oder erschwert. Durch das eingesetzte Signaturverfahren und/oder die Prüfziffernberechnungsverfahren ist erkennbar, ob das ursprüngliche Bild beziehungsweise die Informationseinheit im Nachhinein verändert wurde und somit nicht mehr vertrauenswürdig ist. Zum Schutz des Anwenders vor dem Herunterladen von Schadsoftware oder dem Weiterleiten an kostenpflichtige Dienste ohne Einwilligung sind einerseits Kontrollmechanismen in der Smartphone-Applikation und andererseits eine nicht offene Codierung vorgesehen. Innerhalb der Smartphone-Applikation können schadhafte Auffälligkeiten in der decodierten Information gefiltert und dem Anwender angezeigt werden.

In einem weiteren Schritt 140 werden die Informationen oder Nutzdaten nun codiert. Dazu wird zunächst ein Raster über die Informationseinheit 1 gelegt. Das Raster ist dabei nicht unabhängig oder getrennt von der Informationseinheit. Erstens wird es lediglich innerhalb der Außenkontur 2 angewendet und zweitens ist es nicht sichtbar, sondern gibt einen Rahmen für die Anwendung der Codierung aus einzelnen Rasterelementen oder Bildpunkten der Informationseinheit 1 vor. Das Raster ist gewissermaßen eine Schablone, durch welche die Codierung auf die Informationseinheit 1 angewendet wird.

Die Auswahl des Rasteraufbaus ist bestimmt durch die Rasterform beziehungsweise Rasterausprägung und ein wesentlicher Parameter für den späteren Code, da die Rasterform und die Rasterfarbe das Design des zu codierenden Bildes beeinflussen. Zudem hängen die Lesesicherheit des Codes und die mögliche Informationsdichte ebenfalls von der Wahl der Rasterform- beziehungsweise der Farbe ab.

Zur Codierung der Nutzzeichen wie Buchstaben, Nummern und/oder Zeichen innerhalb des Codes wird vorzugsweise das binäre System verwendet. Dementsprechend werden Graustufenwechsel oder Farbwechsel zwischen den einzelnen Rasterelementen oder Pixeln der Informationseinheit beziehungsweise des Bildes in Bitfolgen umgewandelt. Zur Überführung der Bitfolgen in Nutzzeichen muss eine Referenztabelle und ein dementsprechender Zeichensatz vereinbart werden. Die Referenztabelle gibt die Zuordnung zwischen vorliegender Bitfolge und dem entsprechenden Zeichen aus dem gewählten Zeichensatz an. Vorzugsweise werden gängige Zeichensätze wie zum Beispiel der numerische, alphanumerische beziehungsweise der ISO-Zeichensatz für die Codierungsvorschriften betrachtet.

Zur Verbesserung einer realitätsnahen Darstellung und zur Erhöhung der Informationsdichte wird neben der 2-dimensionalen Lagecodierung vorzugsweise eine Farbcodierung verwendet, so dass sich ein dreidimensionaler Code ergibt. Während bei einem Schwarz-Weiß-Code eine Informationsdichte von einem Bit pro Pixel vorliegt, ergibt sich bei einem Farbcode eine Informationsdichte von der Anzahl der Farben pro Pixel. Da der Farbraum in Abhängigkeit von der Informationseinheit variabel ist, ist auch die Codierung und ihre Informationsdichte variabel.

Durch die Bedingung zur realitätsnahen Darstellung werden vorzugsweise die zum codierenden Bild passenden Farben für die Codierung herangezogen. Zur Festlegung des zu verwendenden Farbraumes unter Berücksichtigung der Farben des Originalbildes werden Methoden aus der Bildverarbeitung verwendet. Um eine variable Anzahl von zu benutzenden Farbtönen zur Codierung zu ermöglichen, ist die entsprechende Zeichensatz-Referenztabelle ebenfalls variabel. Weil die Anzahl der ausgewählten Farbtöne zur Codierung, die Ausprägung der Zeichensatz-Referenztabelle und die Größe die Informationsdichte bestimmen, kommt ein entsprechendes dynamisches Verfahren zum Einsatz. Das eingesetzte dynamische Verfahren orientiert sich dabei an dem vorgegebenen Farbraum, der automatisch anhand der Bildvorlage bzw. manuell durch den Benutzer ausgewählt werden kann. Die Zuweisung der Farben zu den einzelnen Elementen des Codierungsrasters wird anhand der Farbdifferenzen an der Stelle dieses Elementes im Originalbild berechnet. Sollte die entsprechende Farbdifferenz unter der minimalen Grenze liegen, die eine Kamera unter Berücksichtigung von Umgebungseinflüssen (Beleuchtung, Verschmutzung u.a.) benötigt, um diese Farben unter Vorgabe einer Fehlertoleranz als unterschiedliche Farben zu erkennen, werden die Farbdifferenzen dementsprechend angepasst. Die Anzahl der eingesetzten Farbtöne zur Auswahl der entsprechenden Zeichensatz-Referenztabelle wird direkt im Code-Header codiert.

Schließlich wird in einem letzten Schritt 150 der Codierung das Design der codierten Daten an die Informationseinheit angepasst. Diese Aufgabenstellung beinhaltet die Anpassung des Codemusters an das zu codierende Bild, Logo beziehungsweise die symbolhafte Darstellung der Informationseinheit. Um ausschließlich das Logo bzw. die symbolhafte Darstellung und nicht den Hintergrund des Originalbildes codieren zu können, muss vor der Codierung eine automatische oder halbautomatische Separierung des Logos oder der symbolhaften Darstellung vom Hintergrund stattfinden. Die ausschließliche Verwendung des Logos bzw. der symbolhaften Darstellung zur Codierung ist aus Gründen einer realitätsnahen Darstellung erwünscht. Die Separierung kann manuell durch den Anwender oder durch bildverarbeitende Verfahren erfolgen. Basierend auf diesem separierten Bildausschnitt, der im Ablauf der Codierung als Informationseinheit dient, wird dann automatisch oder halbautomatisch ein Erkennungsmuster inklusive Header, ein Codierungsraster und eine variable Lageerkennung für die Codierung bestimmt.

Durch die sehr große Vielfalt von zu codierenden Informationseinheiten beziehungsweise Bildern, Logos oder symbolhaften Darstellungen, in die der Code integriert wird, ist unter Berücksichtigung einer hohen Lesesicherheit durch herkömmliche Smartphones, Tablets beziehungsweise gewerblich genutzte monochrome beziehungsweise nicht-monochrome Kamera-Scanner ein an die Form des Originalbildes anpassbarer Code vorgesehen. Dafür ist eine variable Lageerkennung und ein an die Form des Originalbildes anpassbarer Rasteraufbau vorgesehen.

Nach diesen Schritten ist eine codierte Informationseinheit 5 entstanden, in welche zusätzliche Information codiert wurde. Dabei ist der Gesamteindruck der ursprünglichen Informationseinheit 1 erhalten geblieben, weil die Codierung einerseits nur innerhalb der Grenzen der Informationseinheit und andererseits direkt auf die Informationseinheit selbst beziehungsweise auf Rasterelemente oder Bildpunkte der Informationseinheit angewendet wird. Damit kommt ein Raster nur als Maske oder Zwischenschritt der Codierung zum Einsatz, ist aber in der codierten Informationseinheit nicht mehr in vollem Umfang direkt oder nicht mehr in vollem Umfang wahrnehmbar.

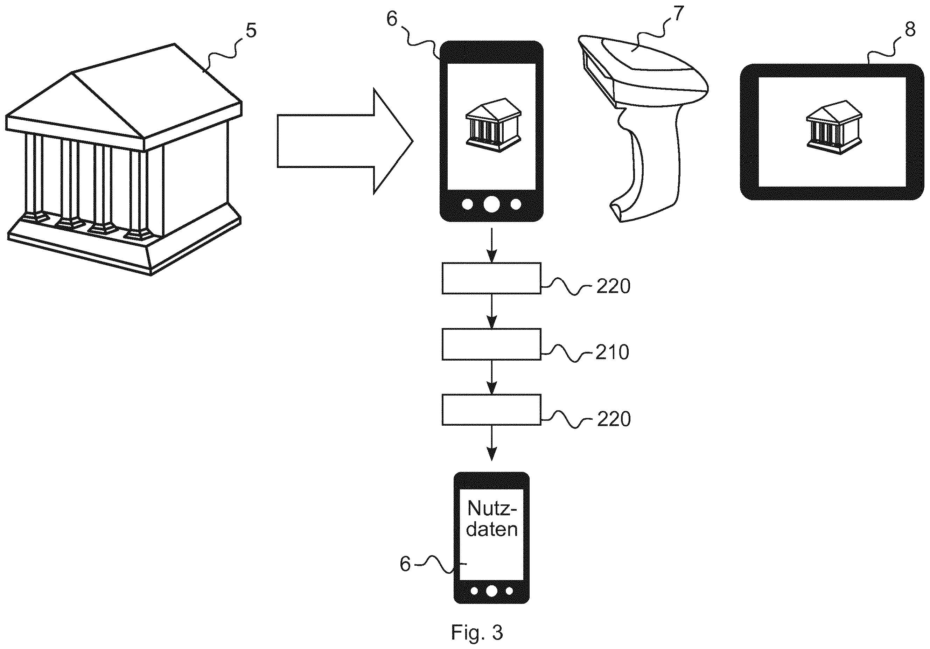

Anhand von Figur 3 wird nun beispielhaft die Decodierung einer codierten Informationseinheit 5 beschrieben.

Zunächst wird die codierte Informationseinheit 5 eingescannt oder aufgenommen. Dies kann zum Beispiel mit einem Smartphone 6, einem Scanner 7 oder einem Tablet 8 erfolgen. Allgemein ist eine Bilderfassungseinheit zum Beispiel in Form einer Kamera und eine Auswertungs- oder Bearbeitungseinheit notwendig, welche das aufgenommene Bild auswertet, das heißt die codierten Informationen extrahiert.

Dazu werden zunächst in einem Schritt 200 die Nutzdaten oder die Information decodiert. Der Schritt der Decodierung 200 umfasst mehrere Unterschritte.

Um das definierte Raster, das in der Decodierungsbibliothek enthalten sein kann, korrekt auf die Informationseinheit 5 zu projizieren, wird die relationale Lage der Kamera zur Informationseinheit 5 bestimmt, was durch ein Muster oder mehrere Markierungen, vorzugsweise zwei oder drei, zur Lageerkennung realisiert wird. Das Muster zur Lageerkennung ist gewählt, dass damit eine omnidirektionale Lesbarkeit mit einem Smartphone, Tablet bzw. einem Kamerascanner möglich ist und dennoch das Design des Originalbildes nicht negativ oder nur unwesentlich beeinflusst wird.

Je nach Anwendungsgebiet werden unterschiedliche Anforderungen an die Höhe der Informationsdichte und die Sicherheit des Codes gestellt. Während beim Mobile Tagging meist nur kürzere Informationen im Code gespeichert werden müssen, wie zum Beispiel digitale Visitenkarten oder URL' s, werden im Bereich der Logistik und der Auto-ID Systeme höhere Anforderungen an den Code gestellt. Neben hohen Sicherheitsanforderungen wird der Code in den meisten Fällen mit einem Datenbankeintrag verknüpft, indem dazugehörige ausführliche Artikelinformationen hinterlegt sind. Der Barcode dient in diesem Falle aber nicht nur zur Anzeige von Informationen, sondern wird auch zu verwaltungstechnischen Aufgaben eingesetzt. So wird zum Beispiel beim Verkauf des Artikels die Stückzahl im dazugehörigen Datenbankeintrag heruntergesetzt.

Um die genannten Anforderungen an den Code zu erfüllen, ist eine Erweiterung der reinen Decodierungsfunktionalität um eine TCP/IP Komponente innerhalb der Smartphone-Applikation vorgesehen. Mit dieser Erweiterung ist eine praxisnahe Umsetzung von folgenden in der Praxis am häufigsten anzutreffenden Infrastrukturansätzen zur Verarbeitung und Interpretation von Barcodes möglich.

Der erste in der Praxis häufig genutzte Ansatz zur Decodierung verwendet eine Datenbank, in der eine dezentral decodierte Codeinformation von einem Client wie einem Smartphone zu einem zentralen Server übertragen wird, der durch eine Datenbankabfrage eine dem Code zugeordnete Information zurückgibt. Dies kann ein Einlesen eines Barcodes von einem Artikel und eine direkte Anzeige der entsprechenden Artikelinformationen sein. Beim eingesetzten Server ist sowohl ein firmeninterner als auch ein Webserver denkbar, so dass je nach Sicherheitsanforderungen und Einsatzgebiet eine Variabilität in der Infrastruktur möglich ist. Auch nachträgliche Veränderungen am Barcode zum Beispiel bei Tippfehlern oder sich verändernden Artikelinformationen sind mit dieser Lösung umsetzbar, da im Code nur die Datenbankreferenz gespeichert wird und deshalb nur ein zentraler Datenbankeintrag verändert werden muss, anstatt alle Barcodes die von dieser Informationsänderung betroffen sind, neu zu codieren.

Im Gegenteil dazu, existiert der Ansatz zur dezentralen lokalen Decodierung auf dem Endgerät wie einem Tablet oder Smartphone, das keine Verbindung zu einem Netzwerk bzw. Server aufweisen muss. Dieser Ansatz lässt keine nachträglichen Änderungen in der codierten Information zu und bezieht die kompletten Informationen ausschließlich aus den Bilddaten. Dieser Ansatz wird aktuell in fast allen Mobile Tagging Anwendungen eingesetzt und bietet eine besonders hohe Flexibilität, da kein Zugriff auf ein Netzwerk vorhanden sein muss.

Die beiden Ansätze haben abhängig vom Einsatzgebiet Vor- und Nachteile und werden daher fallspezifisch ausgewählt. Zur Umsetzung der beiden Ansätze wird die gleiche Decodierungsfunktionalität genutzt. Durch eine optional, gegebenenfalls durch den späteren Anwender, hinzufügbare TCP/IP Komponente zur Übertragung der decodierten Informationen auf einen beliebigen Server sind dann die oben genannten Ansätze in unterschiedlichsten Anwendungsgebieten einsetzbar.

Anhand des Headers, der Lageerkennung und des bekannten Decodierungsalgorithmus wird die Informationseinheit decodiert. Die zur Decodierung benötigten Informationen, wie zum Beispiel die verwendete Codierungsversion können aus dem Header oder einer allgemeingültigen Information oder Vereinbarung entnommen oder abgeleitet werden.

Anhand der Bitinformationen aus den einzelnen Bildelementen beziehungsweise Pixeln beziehungsweise der Bitinformationen aus den Übergängen zwischen den einzelnen Bildelementen beziehungsweise Pixeln berechnet der Decodierungsalgorithmus die Nutzdaten. Durch die Verwendung von mehr als zwei Farben sind Bitinformationen mit mehr als einem Bit pro Übergang zwischen zwei Pixeln bzw. Bildelementen möglich. Bei der Verwendung von zwei Farben (z.B. schwarz-weiß) wäre die Codierung von einem Bit (0 oder 1) pro Übergang möglich. Die diesbezügliche Anzahl von Bitinformationen pro Übergang ist daher abhängig von der Anzahl der Farben zur Codierung. Die Aneinanderreihung von aufeinanderfolgenden Bitinformationen wird als Bitfolge bezeichnet.

Anhand der Zeichensatz-Referenztabelle, die im Header der codierten Informationseinheit angegeben ist, kann die Bitfolge anhand der Zeichensatz-Referenztabelle in das Zielalphabet oder der Zielzeichensatz (z.B. ASCII-Datensatz - Verwendung einer 8-Bitfolge um ein Zeichen eines Zeichensatzes von 256 Zeichen abzubilden) überführt werden.

In einem weiteren, optionalen Schritt 210 wird eine Fehlererkennung beziehungsweise Fehlerkorrektur ausgeführt. Die aus der Fehlerkorrektur gewonnen Daten können optional als Erfahrungswerte oder Parameter für neue Codierungen verwendet werden, um die Fehlerrate bei der Übertragung zu senken. So kann eine Rückkopplungsschleife zur Verbesserung der Codierung/Decodierung entstehen. Die Fehlererkennung kann auf bekannten Verfahren beispielsweise unter Verwendung von Redundanzen oder Prüfsummen basieren.

Insgesamt ist der gesamte optisch/bildgebende Pfad im Kontext des effizient nutzbaren Codes zu betrachten und bei Erreichen von Parametergrenzen ist unter Umständen wiederum auf den Code und/oder die Codierung zurückzuwirken. Hinsichtlich des Codes sind dazu folgende Parameter wie ein minimal tolerierbarer Kontrast, der Einfluss von Störungen durch Schmutz, Abnutzung, Beschädigung, die maximal zu speichernde Informationsmenge sowie die Nutzung hierarchischer Informationsspeicherung definiert.

Der Code soll auch durch Systeme nutzbar sein, die über übliche Festbrennweitenkameras verfügen, wie zum Beispiel Smartphones. Der Bildaufnahmepfad wird charakterisiert durch den Abstand des Objekts zum Aufnahmesystem, die Beleuchtung des Objekts, das Objektiv des Aufnahmesystems mit Parametern wie Brennweite, Abbildungsqualität und Lichtstärke. Ein weiteres Kriterium sind der Sensor und die Datenspeicherung, sowie Parameter wie Sensorgröße (Auflösung), Signal-Rausch-Abstand, zu speichernde Bilddaten, das Speicherformat, unter Umständen eine verlustbehaftete Speicherung sowie Zusatzinformation zur Code-Information, wie zum Beispiel Ort, Zeit etc.

Es ist im Nutzungskonzept des Codes durchaus sinnvoll, eine Informationsrückkopplung während der Bildaufnahme zu ermöglichen. Diese Rückkopplung kann eine Steuerung der Datenaufnahme, zum Beispiel die Erfassung des Codierungstyps, Analyse der Ausrichtung und eine Regelung des Aufnahmeabstands umfassen, wobei Anweisungen an das Aufnahmegerät durch den Aufnahmealgorithmus vorgegeben werden. Weitere Aspekte können die Bildvorverarbeitung sowie die Gewinnung der Zielinformation umfassen.

Die einzelnen zuvor beschriebenen Komponenten interagieren und werden vorteilhafterweise gemeinsam betrachtet. Es ist zu erwarten, dass Rekursionen der Entwicklung durchgeführt werden müssen, um ein stabiles Konzept mit hoher Fehlertoleranz und einem einfachen, echtzeitfähigen Algorithmus zu erstellen und umzusetzen.

Die Berücksichtigung und die Angabe von Fehlertoleranzen sind sehr maßgeblich für den praktischen Einsatz, um eine Rekonstruktion der Information von fehlerbehafteten Codes zu ermöglichen. Fehler innerhalb eines Codes können durch Beschädigungen am Code, durch eine ungenügende Druckqualität oder durch verursachte Störungen aufgrund von Umwelteinflüssen bei der Aufnahme entstehen. Dies kann zum Beispiel durch eine Verdeckung des Codes durch ein anderes Objekt oder ungünstige Beleuchtungsverhältnisse hervorgerufen werden. Derartige Fehler müssen für den praktischen Einsatz berücksichtigt werden, um eine hohe Fehlertoleranz zu garantieren.

Zur Berücksichtigung von Fehlertoleranzen können bestehende Fehlerkorrekturalgorithmen wie zum Beispiel der Reed-Solomon-Algorithmus verwendet werden.

Ein Element in der Nutzung des Codes kann eine zu integrierende Redundanz von Information sein, um auch begrenzt gestörte Datenfelder sicher erfassen zu können. Hierbei spielt der implementierbare Grad der Redundanz die zentrale Rolle, da dieser direkten Einfluss hat auf die noch zulässige Störung des Codes zum Beispiel durch nachlassenden Kontrast, durch fehlende bzw. nicht decodierbare Flächenanteile und/oder durch die Qualität der Ausleuchtung. Parameter der erforderlichen Bilderfassungshardware wie zum Beispiel die Schärfe der Abbildung, die notwendige effektive Bildauflösung und/oder die Geschwindigkeit der Vorverarbeitung oder Verarbeitung der Bilddaten spielen ebenfalls eine Rolle.

Auch der erforderliche Algorithmus beziehungsweise die Leistungsfähigkeit der Bildverarbeitung, wie zum Beispiel die Integrierbarkeit in die Zielumgebung/Hardware, die Echtzeitfähigkeit in der Zielumgebung und/oder die Einfachheit in der Bedienung können berücksichtigt werden.

Die eigentliche Bildverarbeitung umfasst die Aufnahme und Extraktion der Information des Codes mittels der verfügbaren umgebenden Hardware und deren Schnittstellen. Hierbei ist zu trennen in den Erkennungsalgorithmus sowie ergänzende Bildverarbeitungstools im Sinne von Vorverarbeitung wie das Erfassung eines Musters, die Führung der Hardware über eine Benutzerschnittstelle bei der Erstellung der Aufnahme, wie zum Beispiel die Justierung des Abstands der Kamera zum Objekt, der Erfassung und Korrekturvorgabe eines besseren Aufnahmewinkels, und/oder der Nutzung eines hierarchischen Codes, wie zum Beispiel anhand der Parameter Orientierung, Code-Typ, Basisinformation und/oder Detailinformation. Schließlich wird die eigentliche Gewinnung der Zielinformation, das heißt der Nutzdaten, berücksichtigt.

In einem Schritt 220 werden die Nutzdaten entschlüsselt, wenn die Codierung mit einer Verschlüsselung durchgeführt worden ist. Dieser Schritt ist daher optional. Angaben zu der gewählten Verschlüsselung können zum Beispiel in dem Header enthalten sein.

Schließlich werden die Nutzdaten angezeigt und/oder verarbeitet. Dies kann in dem Erfassungsgerät wie zum Beispiel dem Smartphone 6 oder in einer anderen Instanz wie einem mit dem Erfassungsgerät verbundenen Computer geschehen. Damit stehen die in der Informationseinheit codierten und gegebenenfalls verschlüsselten Informationen wieder zur Verfügung.

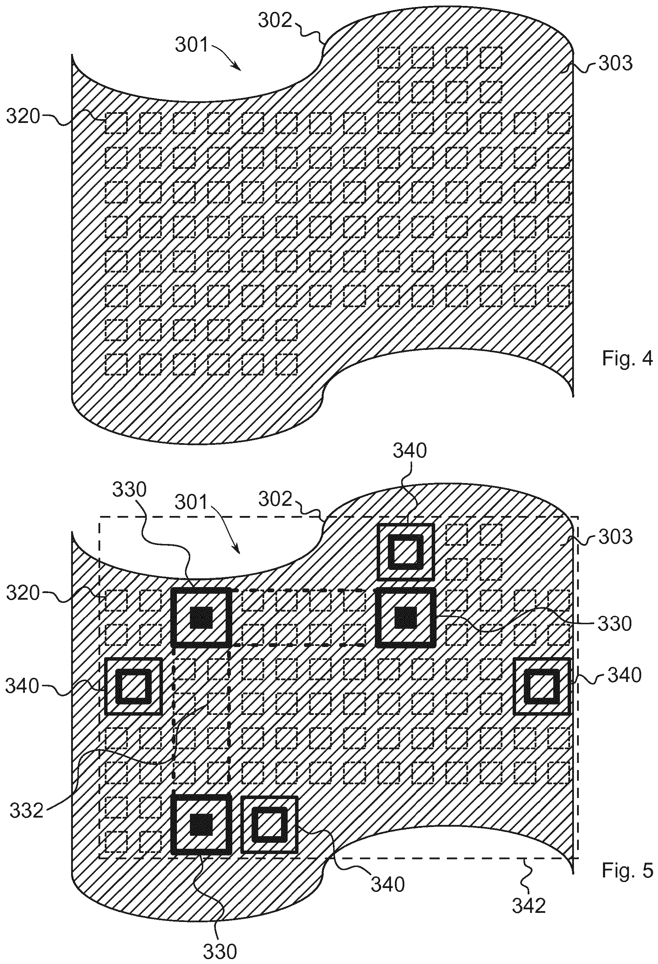

Mit Bezug auf die Figuren 4 bis 9 wird im Folgenden eine bevorzugte Ausführungsform eines Verfahrens zum Codieren von Informationen in eine graphische Informationseinheit exemplarisch beschrieben. Dabei werden insbesondere die vorstehend mit Bezug auf Fig. 2 allgemein beschriebenen Schritte 140 und 150, welche die Codierung der Informationseinheit betreffen, im Detail erläutert.

Fig. 4 zeigt eine graphische Informationseinheit 301 mit einer Außenkontur 302, welche einen zu codierenden Innenbereich 303 begrenzt und umschließt. Die Informationseinheit 301 kann beispielsweise Teil eines Logos sein.

In einem vorbereitenden Schritt wird zum Codieren der Informationseinheit 301 ein an die Außenkontur 302 adaptiertes Raster auf die Informationseinheit 301 gelegt. Die entsprechenden Elemente 320 des adaptiven Rasters sind zeilen- und spaltenförmig regelmäßig entlang vorgegebener Richtungen (X- und Y-Richtung) angeordnet. Größe und Form der Rasterelemente 320 sowie ein Rasterabstand in jeder der beiden Richtungen, und damit auch eine Anzahl von Rasterelementen, kann variiert werden.

Fig. 5 illustriert exemplarisch einen optionalen Schritt des Anordnens von Markierungen 330, 340, welche beim Decodieren eine Lageerkennung der codierten Informationseinheit erlauben.

Die Markierungen 330 zur Lageerkennung werden angeordnet, um beim Decodieren eindeutig eine Lage der codierten Informationseinheit relativ zu einem Erfassungsgerät bestimmen zu können. D.h. eine erfasste Codierung der Informationseinheit 301 kann auf Basis der Markierungen 330 gegebenenfalls gedreht und/oder skaliert werden, um eine eindeutige und korrekte Decodierung zu ermöglichen. Auch eine perspektivische Verzerrung, die beim Erfassen der Codierung auftreten kann, kann anhand dieser Markierungen 330 korrigiert werden. Die in Fig. 5 exemplarisch dargestellten Markierungen können beim Decodieren einfach und ohne zusätzliche Vorbereitung nach einer Erfassung der Codierung erkannt und verarbeitet werden, wodurch das Decodieren insgesamt vereinfacht wird.

Optional kann Headerinformation 332 in die codierte Informationseinheit eingebracht werden, welche Informationen oder Angaben umfassen kann, die eine Decodierung einer codierten Informationseinheit vereinfacht oder erst möglich macht. Solche Angaben können beispielsweise das Raster, eine vorgegebene Anzahl von Farbabstufungen, eine gegebenenfalls verwendete Verschlüsselung und dergleichen betreffen. Vorzugsweise wird eine solche Headerinformation in - durch die gepunktete Linien in Fig. 5 angedeuteten - Bereichen zwischen den Lagemarkierungen 330 angeordnet, damit sie zu Beginn des Decodierprozesses schnell und einfach aufgefunden werden kann.

Weiter optional können zusätzlich Markierungen 340 zur Lageerkennung vorgesehen sein, die die Grenzen des zur Informationscodierung verwendeten Rasters definieren. Diese Grenzen sind in Fig. 5 durch den Rahmen 342 angedeutet.

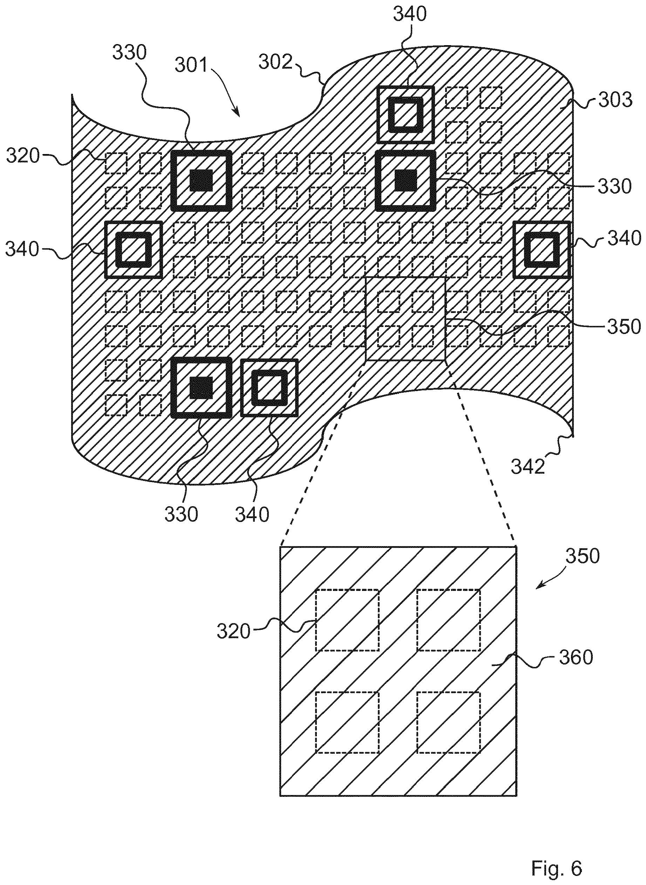

In den Figuren 6 bis 9 ist dargestellt, wie eine konkrete Ausführungsform eines dreidimensionalen Farbcodes gebildet werden kann. Verschiedene Farben werden dabei in den Figuren mittels verschieden schraffierter Bereiche dargestellt.

Wie in Fig. 6 gezeigt, werden in einem ersten Teilschritt die Elemente des Rasters jeweils in Gruppen 350 zusammenhängender Elemente 320 des Rasters aufgeteilt. Im gezeigten Beispiel besteht eine solche Gruppe 350 aus einen 2*2-Teilraster. Es versteht sich, dass die Dimension eines solchen Teilrasters variabel sein kann, z.B. auch die Größe 2*3, 4*2, 3*3, 4*4 oder ähnliche Größen aufweisen kann. Wesentlich ist lediglich, dass sämtliche Elemente einer solchen Gruppe in einem zusammenhängenden Bereich der Informationseinheit, d.h. in gewisser Weise benachbart zueinander, angeordnet sind.

In einem weiteren Teilschritt wird nun für eine solche Gruppe 350 eine Gruppenfarbe 360 bestimmt. Diese Gruppenfarbe 360 wird auf Basis einer Farbverteilung in dem Bereich der Informationseinheit bestimmt, welche die zu der Gruppe 350 gehörenden Rasterelemente 320 umfasst. Ein solcher Bereich ist exemplarisch in Fig. 6, unten, dargestellt. In dem Fall, dass dieser Bereich einfarbig ist, entspricht dessen Farbe der Gruppenfarbe 360. Umfasst der Bereich mehrere Farben oder einen Farbverlauf, so wird die Gruppenfarbe 360 als Mittel- oder Modalwert über die Farben des Bereichs gebildet.

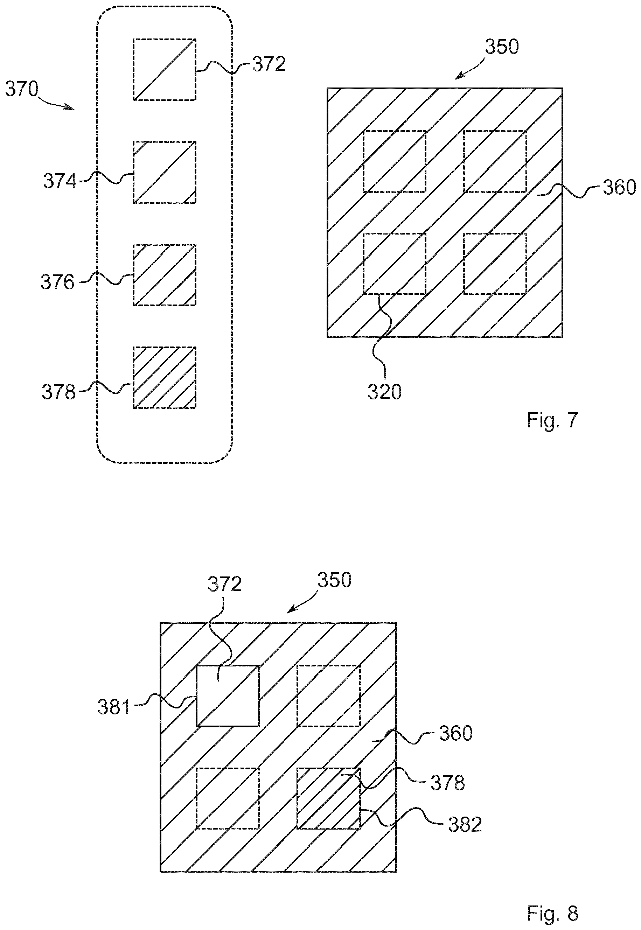

In Fig. 7 ist angedeutet, wie abhängig von der Gruppenfarbe 360 für die Rasterelemente 320 der Gruppe 350 lokal, d.h. lediglich für die eine Gruppe 350 und lediglich abhängig von der für den einen Bereich bestimmten Gruppenfarbe 360, ein Teilfarbraum 370 bestimmt wird, welcher diejenigen Farben umfasst, welche dann zur Färbung der Rasterelemente 320 der Gruppe 350, d.h. zum Codieren der Informationseinheit 301 in dem Bereich, in dem die Elemente 320 der Gruppe 350 angeordnet sind, verwendet werden. Die Größe dieses Teilfarbraums 370, d.h. die Anzahl verschiedener Farben in diesem Teilfarbraum, kann vorab festgelegt werden und beispielsweise, für die Decodierung, in der Headerinformation 332 angegeben werden. Im gezeigten Beispiel umfasst der Teilfarbraum 370 vier Farben 372, 374, 376 und 378.

Die Farben 372, 374, 376, 378 des Teilfarbraums 370 unterscheiden sich von der Gruppenfarbe 360 lediglich in einem Farbparameter, im gezeigten Beispiel in der Helligkeit. Andere Farbparameter, beispielsweise Sättigung oder Tonwert, oder vorgegebene Kombinationen solcher Farbparameter, können ebenfalls verwendet werden, um ausgehend von der Gruppenfarbe die Farben des Teilfarbraums in vorgegebener Weise zu bilden. Die Farben des Teilfarbraums werden somit derart gebildet oder berechnet, dass sie stets ähnlich zu der Gruppenfarbe sind, und damit ähnlich zu der Farbe des Bereichs der Informationseinheit, in dem die mittels dieser Farben dann im Rahmen der Codierung gefärbten Elemente des Rasters angeordnet sind. Auf diese Weise kann sichergestellt werden, dass der Farbraum der Codierung und damit das adaptive Raster in jedem Bereich der Informationseinheit an den Farbraum der Informationseinheit angepasst ist.

In Fig. 8 ist exemplarisch dargestellt, wie eine Decodierung einer mittels der Farben 372, 374, 376, 378 des Teilfarbraums 370 in dem entsprechenden Bereich der Informationseinheit eingebrachten Codierung in einfacher Weise decodiert werden kann. Dazu werden zwei bestimmte Farben 372, 378 des Teilfarbraums 370 als erste und zweite Referenzfarbe ausgewählt, nämlich diejenigen Farben des Teilfarbraums 370, die sich mit Bezug auf den vorgegebenen Farbparameter innerhalb des Teilfarbraums 370 am deutlichsten unterscheiden. Im gezeigten Beispiel sind dies die hellste 372 und dunkelste Farbe 378 des Teilfarbraums 370. Diese beiden Referenzfarbe färben zwei vorgegebene Elemente der Gruppe 350, nämlich das Element 381 in der oberen linken Ecke und das Element 382 in der linken unteren Ecke des 2*2-Teilrasters, welches die Gruppe 350 bildet. Diese Vorgehensweise dient dazu, dass im Schritt des Decodierens zuerst die Farben dieser beiden vorgegebenen Elemente erfasst und als Referenzfarben 372, 378 ausgewertet werden können. Auf Basis dieser Referenzfarben 372, 378, und in Kenntnis der Anzahl der Farben des Teilfarbraums 370, können dann die restlichen Farben 374, 376 des Teilfarbraums 370 lokal eindeutig bestimmt werden.

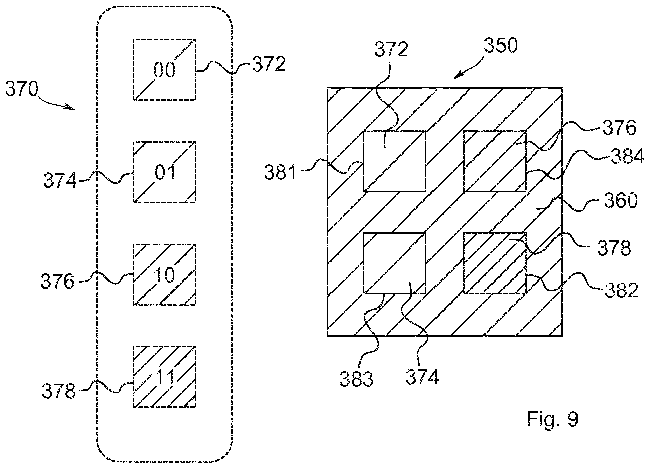

Wie in Figur 9, linke Seite, angedeutet, kann jeder Farbe 372, 374, 376, 378 des Teilfarbraums 370 eine mittels dieser Farbe codierbare Zeichenkette eindeutig zugeordnet werden. Die beiden anderen Rasterelemente 383, 384 der Gruppe 350 können, wie in Fig. 9, rechte Seite, angedeutet, nun zum Codieren von Informationen frei verwendet werden, d.h. mittels jeweils einer der Farben 372, 374, 376, 378 des Teilfarbraums 370 gefärbt werden.

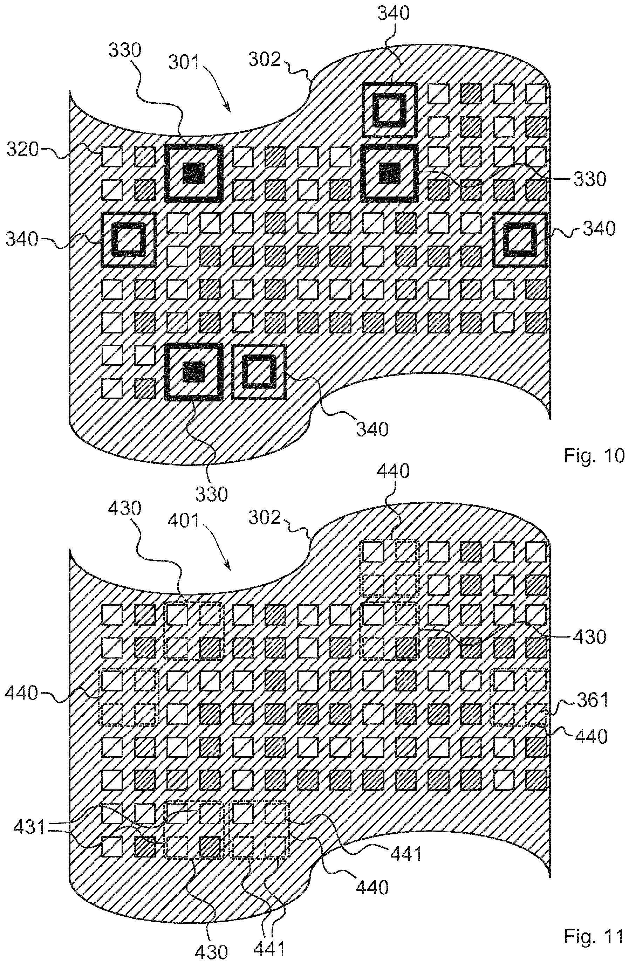

In Fig. 10 ist schließlich eine in der vorstehend beschriebenen Weise vollständig codierte Informationseinheit 301 exemplarisch dargestellt. Der einfacheren Verständlichkeit halber sind sämtliche Gruppen 350 hier mit Bezug auf dieselben Gruppenfarbe 360 gefärbt worden, wie dies beispielsweise der Fall wäre, wenn die Informationseinheit 301 insgesamt einfarbig wäre.

In Fig. 11 ist eine Variante 401 der codierten Informationseinheit 301 aus Fig. 10 dargestellt. Diese unterscheidet sich von derjenigen aus Fig. 10 in der Art der Lagemarkierungen 430, 440. In dem in Fig. 11 gezeigten Beispiel bestehen die Lagemarkierungen 430, 440 aus teilweise spezifisch gefärbten Rasterelementen 320 des Rasters selbst. Die Lagemarkierungen 430, 440 umfassen dabei eine Mehrzahl von Rasterelementen 320, entsprechend den vorstehend beschriebenen Gruppen 350 von zusammenhängenden Rasterelementen 320. Die Lagemarkierungen 430, 440 sind einmal daran zu erkennen, dass einzelne der Rasterelemente der Lagemarkierungen 430, 440 mittels einer spezifischen Markierungsfarbe 361 gefärbt sind. Die Markierungsfarbe 361 zeichnet sich dadurch aus, dass sie eine vorgegebene Farbdifferenz zu einer Farbe des Bereichs, in dem die Rasterelemente der Lagemarkierung angeordnet sind, nicht überschreitet. Mit anderen Worten ist auch die Markierungsfarbe 361 ähnlich zu der entsprechenden Farbe des Bereichs der Informationseinheit. Es könnten alternativ auch eine Mehrzahl von Markierungsfarben verwendet werden, welche dann jeweils das vorstehend angegebene Farbdifferenzkriterium erfüllen. Grundsätzlich kann zum Bestimmen einer Markierungsfarbe 361 vorgegangen werden wie beim Bestimmen der Gruppenfarbe zu einer Gruppe von Rasterelementen oder wie beim Bestimmen der Farben eines Teilfarbraums für eine solche Gruppe. Im gezeigten Beispiel entspricht die eine Markierungsfarbe 361 der Gruppenfarbe 360, d.h. die Farbdifferenz der Markierungsfarbe 360 zur Farbe des entsprechenden Bereichs der Informationseinheit ist null. Die Markierungsfarbe 361 kann sich aber auch innerhalb vorgegebener Grenzen von der Farbe des entsprechenden Bereichs der Informationseinheit unterscheiden, solange keine Verwechslung mit einer Farbe eines entsprechenden Teilfarbraums einer diesem Bereich potentiell zugeordneten Gruppe von Rasterelementen zu befürchten ist.

Ein weiteres Kennzeichen der Markierungen 430, 440 ist die spezifische räumliche Anordnung einer Mehrzahl von in der Markierungsfarbe 361 gefärbten Rasterelementen zueinander - diagonal gegenüberliegend in den Lagemarkierungen 430, in L-Form in den Lagemarkierungen 440. Es können im Zusammenhang mit einer solchen Ausführungsform anstatt nur einer Markierungsfarbe 361 auch verschiedene Markierungsfarben verwendet werden.

Wie in Fig. 11, insbesondere im Vergleich zu Fig. 10, zu erkennen, kann mittels entsprechend gebildeter Lagemarkierungen 430, 440 eine optisch sehr unauffällige Codierung der Informationseinheit 301 erhalten werden. Der Aufwand bei der Decodierung, zum Erkennen und Auswerten der Lagemarkierungen 430, 440, steigt jedoch im Vergleich zur Verwendung herkömmlicher Lagemarkierungen, wie in Fig. 10. Dies liegt im Wesentlichen daran, dass das adaptive Raster als solches in einer Ausführungsform nach Fig. 11 in einem ersten Teilschritt des Decodierens ohne die Zuhilfenahme von Lagemarkierungen 430, 440 erkannt werden muss. Insofern sind die Lagermarkierungen 440, welche zum Bestimmen der Grenzen eines Information codierenden Bereichs der Informationseinheit vorgesehen sind, im Zusammenhang einer in Fig. 11 exemplarisch dargestellten Ausführungsform grundsätzlich verzichtbar, da das Raster und dessen Grenzen auch ohne diese Markierungen erkannt werden kann.

## Patentansprüche

1. Verfahren zum Codieren von Informationen in eine graphische Informationseinheit (1), **gekennzeichnet durch** die Schritte:
- Bestimmen einer Außenkontur (2) der Informationseinheit (1); und
- Codieren von Information mittels eines mindestens zweidimensionalen Codes (10) in mindestens einen Bereich (3) ausschließlich innerhalb der Außenkontur (2), wobei die Codierung auf Bildpunkte (11 a, 11b) der Informationseinheit (1) angewendet wird, **dadurch gekennzeichnet, dass** ein dreidimensionaler Farbcode verwendet wird, bei welchem zusätzlich zu einer 2-dimensionalen Lagecodierung eine Farbcodierung verwendet wird, wobei ein Farbraum des Farbcodes zumindest ein Teil eines Farbraumes der Informationseinheit (1) ist, wobei der Farbraum des Farbcodes diejenigen Farben umfasst, die als Farbcodierung verwendet werden.

2. Verfahren nach Anspruch 1, wobei für die Codierung ein adaptives Raster verwendet wird, das an die Außenkontur (2) der Informationseinheit (1) angepasst wird.

3. Verfahren nach Anspruch 2, wobei einem Element des adaptiven Rasters eine Farbe des Farbraums des Farbcodes anhand einer Farbdifferenz zwischen dieser Farbe und einer Farbe der Informationseinheit (1) an der Stelle, welche dem Element des adaptiven Rasters entspricht, zugewiesen wird.

4. Verfahren nach Anspruch 2, wobei ein Teilfarbraum (370) des Farbcodes für eine Gruppe (350) von Elementen (320) des adaptiven Rasters lokal festgelegt wird, abhängig von einer Gruppenfarbe (360), welche für einen Bereich der Informationseinheit (301) bestimmt wird, in welchem die Gruppe der Elemente des adaptiven Rasters angeordnet ist.

5. Verfahren nach Anspruch 4, wobei sich jede der Farben (372, 374, 376, 378) des Teilfarbraums (370) von der Gruppenfarbe (360) bezüglich eines vorgegebenen Farbparameters unterscheidet.

6. Verfahren nach Anspruch 5, wobei
- ein vorgegebenes Element der Gruppe von Elementen des adaptiven Rasters mit derjenigen Farbe des Teilfarbraums gefärbt wird, die sich von der Gruppenfarbe bezüglich des vorgegebenen Farbparameters am deutlichsten unterscheidet, oder
- wobei die beiden Farben (372, 378) des Teilfarbraums (370) ausgewählt werden, die sich bezüglich des vorgegebenen Farbparameters am deutlichsten voneinander unterscheiden und wobei ein erstes vorgegebenes Element (381) der Gruppe (350) von Elementen des adaptiven Rasters mit der ersten (372) der beiden Farben gefärbt wird und ein zweites vorgegebenes Element (382) der Gruppe (350) von Elementen des adaptiven Rasters mit der zweiten (378) der beiden Farben gefärbt wird.

7. Verfahren nach einem der Ansprüche 1 bis 6, wobei die Codierung mindestens zwei Markierungen für eine Lageerkennung der Informationseinheit (5) aufweist.

8. Verfahren nach Anspruch 7, wobei ein dreidimensionaler Farbcode verwendet wird und wobei für die Codierung ein adaptives Raster verwendet wird, das an die Außenkontur und den Farbraum der Informationseinheit (1) angepasst wird, und wobei Markierungen für die Lageerkennung durch Färbung zumindest eines Elements des adaptiven Rasters mit zumindest einer Markierungsfarbe ausgebildet wird, wobei die zumindest eine Markierungsfarbe eine vorgegebene Farbdifferenz zu einer Farbe eines Bereichs der Informationseinheit nicht überschreitet, in dem das zumindest eine Element angeordnet ist.

9. Verfahren nach Anspruch 8, wobei eine Markierung zur Lageerkennung durch Färben einer Mehrzahl von Elementen des adaptiven Rasters mit zumindest einer der zumindest einen Markierungsfarbe ausgebildet wird, wobei die Elemente der Mehrzahl der Elemente bezüglich des adaptiven Rasters eine vorgegebene Lagebeziehung zueinander aufweisen.

10. Verfahren nach einem der vorhergehenden Ansprüche, wobei die Codierung einen Header mit Angaben zu der Codierung aufweist.

11. Verfahren nach einem der vorhergehenden Ansprüche, wobei die Information bei der Codierung verschlüsselt wird.

12. Verfahren zum Decodieren von Informationen aus einer codierten graphischen Informationseinheit (5), **gekennzeichnet durch** die Schritte:
- Erfassen einer mit einem Verfahren nach mindestens einem der Ansprüche 1 bis 11 codierten Informationseinheit (5); und
- Decodieren der Information aus der codierten Informationseinheit (5).

13. Verfahren nach Anspruch 12, wobei ein Erfassungsgerät (6, 7, 8) die Information an eine Datenbank überträgt und eine der Information zugeordnete weitere Information von der Datenbank erhält, oder wobei das Erfassungsgerät (6, 7, 8) die Information verarbeitet.

14. Verfahren nach einem der Ansprüche 12 oder 13, wobei bei der Decodierung mindestens einer der folgenden Schritte ausgeführt wird:
- Anpassen und/oder Anwenden eines Rasters auf die erfasste, codierte Informationseinheit (5);
- Erkennen einer Orientierung der erfassten, codierten Informationseinheit (5) anhand mindestens zweier Markierungen;
- Erfassen eines Headers;
- Decodieren der Information basierend auf Angaben des Headers;
- Durchführen einer Fehlerkorrektur;
- Entschlüsseln der Information;
- Anzeigen der Information.

## Claims

1. A method for encoding information in a graphical information unit (1),
**characterized by** the steps of:
- determining an outer contour (2) of the information unit (1); and
- encoding information by means of an at least two-dimensional code (10) in at least one area (3) exclusively within the outer contour (2), wherein the encoding is applied to pixels (11a, 11b) of the information unit (1), **characterized in that** a three-dimensional color code is used for which, in addition to 2-dimensional position encoding, color encoding is used, wherein a color space of the color code is at least a part of a color space of the information unit (1), wherein the color space of the color code comprises those colors which are used as color encoding.

2. The method according to claim 1, wherein an adaptive grid is used for the encoding, which is adapted to the outer contour (2) of the information unit (1).

3. The method according to claim 2, wherein an element of the adaptive grid is assigned a color of the color space of the color code based on a color difference between this color and a color of the information unit (1) at the place corresponding to the element of the adaptive grid.

4. The method according to claim 2, wherein a sub-color space (370) of the color code is locally set for a group (350) of elements (320) of the adaptive grid depending on a group color (360) which is determined for an area of the information unit (301) in which the group of the elements of the adaptive grid is arranged.

5. The method according to claim 4, wherein each of the colors (372, 374, 376, 378) of the sub-color space (370) differs from the group color (360) in terms of a predetermined color parameter.

6. The method according to claim 5, wherein
- a predetermined element of the group of elements of the adaptive grid is colored with the color of the sub-color space which most clearly differs from the group color in terms of the predetermined color parameter, or
- wherein the two colors (372, 378) of the sub-color space (370) are selected which differ most clearly from one another in terms of the predetermined color parameter and wherein a first predetermined element (381) of the group (350) of elements of the adaptive grid is colored with the first (372) of the two colors and a second predetermined element (382) of the group (350) of elements of the adaptive grid is colored with the second (378) of the two colors.

7. The method according to any one of claims 1 to 6, wherein the encoding has at least two markings for a position identification of the information unit (5).

8. The method according to claim 7, wherein a three-dimensional color code is used and wherein an adaptive grid is used for the encoding, which is adapted to the outer contour and to the color space of the information unit (1) and wherein markings for the position identification are formed by coloring at least one element of the adaptive grid with at least one marking color, wherein the at least one marking color does not exceed a predetermined color difference from a color of an area of the information unit in which the at least one element is arranged.

9. The method according to claim 8, wherein a marking for position identification is formed by coloring a plurality of elements of the adaptive grid with at least one of the at least one marking color, wherein the elements of the plurality of elements have a predetermined position relation to one another in terms of the adaptive grid.

10. The method according to any one of the preceding claims, wherein the encoding has a header with data about the encoding.

11. The method according to any one of the preceding claims, wherein the information is encrypted during the encoding.

12. A method for decoding information from an encoded graphical information unit (5), **characterized by** the steps of:
- detecting an information unit (5) encoded with a method according to at least one of claims 1 to 11; and
- decoding the information from the encoded information unit (5).

13. The method according to claim 12, wherein a detection device (6, 7, 8) transmits the information to a database and receives further information, which is assigned to the information, from the database, or wherein the detection device (6, 7, 8) processes the information.

14. The method according to any one of claims 12 or 13, wherein at least one of the following steps is performed during the decoding:
- adapting and/or applying a grid to the detected, encoded information unit (5);
- identifying an orientation of the detected, encoded information unit (5) based on at least two markings;
- detecting a header;
- decoding the information on the basis of data of the header;
- carrying out error correction;
- decrypting the information;
- displaying the information.

## Revendications

1. Procédé de codage d'informations dans une unité d'informations graphique (1), **caractérisé par** les étapes :
- détermination d'un contour extérieur (2) de l'unité d'informations (1) ; et
- codage d'informations au moyen d'un code au moins bidimensionnel (10) dans au moins une zone (3) exclusivement à l'intérieur du contour extérieur (2), le codage étant appliqué aux points d'image (11a, 11b) de l'unité d'informations (1), **caractérisé en ce qu'**un code de couleurs tridimensionnel est utilisé, avec lequel un codage de couleurs est utilisé en plus d'un codage de position bidimensionnel, un espace chromatique du code de couleurs étant au moins une partie d'un espace chromatique de l'unité d'informations (1), l'espace chromatique du code de couleurs comprenant les couleurs qui sont utilisées comme codage de couleurs.

2. Procédé selon la revendication 1, une grille adaptative étant utilisée pour le codage, laquelle est ajustée au contour extérieur (2) de l'unité d'informations (1).

3. Procédé selon la revendication 2, une couleur de l'espace chromatique du code de couleurs étant attribuée à un élément de la grille adaptative à l'aide d'une différence de couleur entre cette couleur et une couleur de l'unité d'informations (1), à l'emplacement correspondant à l'élément de la grille adaptative.

4. Procédé selon la revendication 2, un espace chromatique partiel (370) du code de couleurs étant défini localement pour un groupe (350) d'éléments (320) de la grille adaptative, en fonction d'une couleur de groupe (360) qui est déterminée pour une zone de l'unité d'informations (301) dans laquelle le groupe des éléments de la grille adaptative est disposé.

5. Procédé selon la revendication 4, chacune des couleurs (372, 374, 376, 378) de l'espace chromatique partiel (370) se distinguant de la couleur de groupe (360) relativement à un paramètre chromatique spécifié.

6. Procédé selon la revendication 5,
- un élément spécifié du groupe d'éléments de la grille adaptative étant coloré avec la couleur de l'espace chromatique qui se distingue le plus de la couleur de groupe relativement au paramètre chromatique spécifié, ou
- les deux couleurs (372, 378) de l'espace chromatique partiel (370) se distinguant le plus l'une de l'autre relativement au paramètre chromatique spécifié étant sélectionnées et un premier élément spécifié (381) du groupe (350) d'éléments de la grille adaptative étant coloré avec la première (372) des deux couleurs et un deuxième élément spécifié (382) du groupe (350) d'éléments de la grille adaptative étant coloré avec la deuxième (378) des deux couleurs.

7. Procédé selon l'une des revendications 1 à 6, le codage présentant au moins deux marques pour une détection de position de l'unité d'informations (5).

8. Procédé selon la revendication 7, un code de couleurs tridimensionnel étant utilisé et une grille adaptative étant utilisée pour le codage, laquelle est ajustée au contour extérieur et à l'espace chromatique de l'unité d'informations (1), et des marques pour la détection de position étant formées par coloration d'au moins un élément de la grille adaptative avec au moins une couleur de marquage, l'au moins une couleur de marquage ne dépassant pas une différence chromatique spécifiée relativement à une couleur d'une zone de l'unité d'informations dans laquelle l'au moins un élément est disposé.

9. Procédé selon la revendication 8, une marque pour la détection de position étant formée par la coloration d'une multiplicité d'éléments de la grille adaptative avec au moins l'une couleur de l'au moins une couleur de marquage, les éléments de la multiplicité des éléments présentant les uns par rapport aux autres un rapport de position spécifié, relativement à la grille adaptative.

10. Procédé selon l'une des revendications précédentes, le codage présentant un en-tête avec des indications relatives au codage.

11. Procédé selon l'une des revendications précédentes, les informations étant cryptées lors du codage.

12. Procédé de décodage d'informations d'une unité d'informations graphique (5) codée, **caractérisé par** les étapes :
- saisie d'une unité d'informations (5) codée avec un procédé selon au moins l'une des revendications 1 à 11 ; et
- décodage des informations de l'unité d'informations (5) codée.

13. Procédé selon la revendication 12, un appareil de saisie (6, 7, 8) transmettant les informations à une base de données et recevant, de la base de données, d'autres informations attribuées aux informations, ou l'appareil de saisie (6, 7, 8) traitant les informations.

14. Procédé selon l'une des revendications 12 ou 13, au moins l'une des étapes suivantes étant exécutée lors du décodage :
- ajustement et/ou application d'une grille à l'unité d'informations (5) codée saisie ;
- détection d'une orientation de l'unité d'informations (5) codée saisie à l'aide d'au moins deux marques ;
- saisie d'un en-tête ;
- décodage des informations sur la base des indications de l'en-tête ;
- exécution d'une correction d'erreurs ;
- décryptage des informations ;
- affichage des informations.
